Europäisches Patentamt

European Patent Office

Office européen des brevets

(19)

(11) Publication number: **0 015 754**
A1

(12)

# EUROPEAN PATENT APPLICATION

(21) Application number: **80300687.3**

(22) Date of filing: **06.03.80**

(51) Int. Cl.³: **H 04 B 5/00, H 04 B 1/68**

(30) Priority: **12.03.79 GB 7908617**

(71) Applicant: **DESIGN ELECTRONICS LIMITED, 100 Chalk Farm Road, London NW1 8EH (GB)**

(43) Date of publication of application: **17.09.80 Bulletin 80/19**

(72) Inventor: **Osborn, Peter Gordon, 100 Chalk Farm Road, London NW1 8EH (GB)**

(84) Designated Contracting States: **AT BE CH DE FR IT LU NL SE**

(74) Representative: **Abbott, Leonard Charles et al, GILL JENNINGS & EVERY 53/64 Chancery Lane, London WC2A 1HN (GB)**

(54) **Audio transmission system.**

(57) For the transmission of a number of channels of high quality audio signals via an inductive loop (11), a transmitter includes a digital sinewave pilot tone generator (7, 8, 9), a number of multipliers (4), phaselocked to the pilot tone, to generate sub-carrier signals which are mutually different integer multiples of the pilot tone frequency. The sub-carriers are modulated by the audio signals in respective balanced modulators (3), and the upper sidebands are suppressed (5). The lower sidebands are mixed (6) and are fed to the loop with the pilot tone. A receiver coupled to the loop regenerates the sub-carriers by receiving the pilot tone and multiplying the pilot tone frequency (18) by the same integers as in the transmitter. The resultant sub-carriers, which are also phase-locked to the pilot tone, are used to demodulate (19) the received lower sidebands. The resultant audio signals are fed to a mixer (21) with channel faders (108–112) and thence to a stereo amplifier (127,128,129) feeding a common output so that all audio channels can be received simultaneously at a transducer (23) such as stereo headphones, with any desired balance between the channels.

Pre-emphasis is applied to the lower sidebands (5) at the transmitter, and the signals are de-emphasised (22) at the receiver.

## AUDIO TRANSMISSION SYSTEM

This invention relates to the transmission of audio frequency signals via an inductive loop.

Systems are known for transmitting speech signals via inductive loops positioned round buildings or round individual rooms. Such systems are commonly used for the simultaneous transmission of translations of conference proceedings into various languages. A separate channel is provided for each language, and only one channel can be selected at a time at any receiving point.

These systems are designed for the transmission of only narrow bandwidth speech signals, and are not suitable for use in transmitting high quality music signals.

In certain locations, particularly in sound recording studios, it is necessary to be able to feed several music channels to each of a number of output positions within the studio so that, for example, several previously recorded tracks on a magnetic tape can be played back to each of a number of musicians. Systems for effecting this are commonly known as "foldback" systems.

In known foldback systems, headphone jacks are provided on output boxes at the various positions, and these boxes are connected to the recording system via cables which trail across the studio and can become a nuisance.

It is an object of the present invention to provide a high quality audio transmission system in which a plurality of music channels are transmitted via an inductive loop to each of a number of receiving positions.

According to the invention, an audio frequency transmission system comprises an inductive loop to produce a magnetic field within a receiving area; a transmitter, including means to generate a reference frequency signal, means responsive to the reference frequency signal to generate a plurality of sub-carrier signals of mutually different frequencies, means to modulate the sub-carrier signals with respective audio frequency signals which are to be transmitted and to suppress the sub-carrier frequencies from the resultant modulated signals, and means to feed the modulated signals and the reference frequency signal to the inductive loop to produce said magnetic field; and receiving apparatus, including means to be located within said receiving area so as to be inductively coupled to the loop to receive the modulated signals and the reference frequency signal, means responsive to the reference frequency signal to generate in the receiving apparatus a plurality of sub-carrier signals having the same frequencies as the sub-carrier signals generated in the transmitter, and means responsive to the sub-carrier signals generated in the receiving apparatus to demodulate the received modulated signals thereby recovering the respective audio frequency signals.

An embodiment of the invention will now be described, by way of example, with reference to the accompanying drawings, in which:

Figs.1 and 2 are schematic block diagrams of a transmitter and a receiving unit, respectively, of an inductive loop transmission system,

Fig.3 is a schematic block diagram of an oscillator circuit of the transmitter,

Fig.4 is a schematic block diagram of a modulation circuit of the transmitter,

Fig.5 is a schematic block diagram of a transmitter filtering and pre-emphasis circuit,

Fig. 6 is a schematic block diagram of a mixer and automatic controller circuit of the transmitter,

Fig. 7 is a schematic block diagram of a circuit for driving the transmitter inductive loop,

Fig. 8 is a circuit diagram of a pre-amplifier for amplifying signals received from the loop,

Fig. 9 is a schematic diagram of an automatic gain control and pilot tone extraction circuit of the receiving unit,

Fig.10 is a schematic block diagram of a sub-carrier reconstituting and demodulating circuit,

Fig.11 is a schematic block diagram of a mixer and audio pre-amplifier circuit of the receiving unit,

Fig.12 is a schematic block diagram of an output audio amplifier of the receiving unit, and

Fig.13 is a schematic block diagram of a circuit for automatically switching the receiver power supplies.

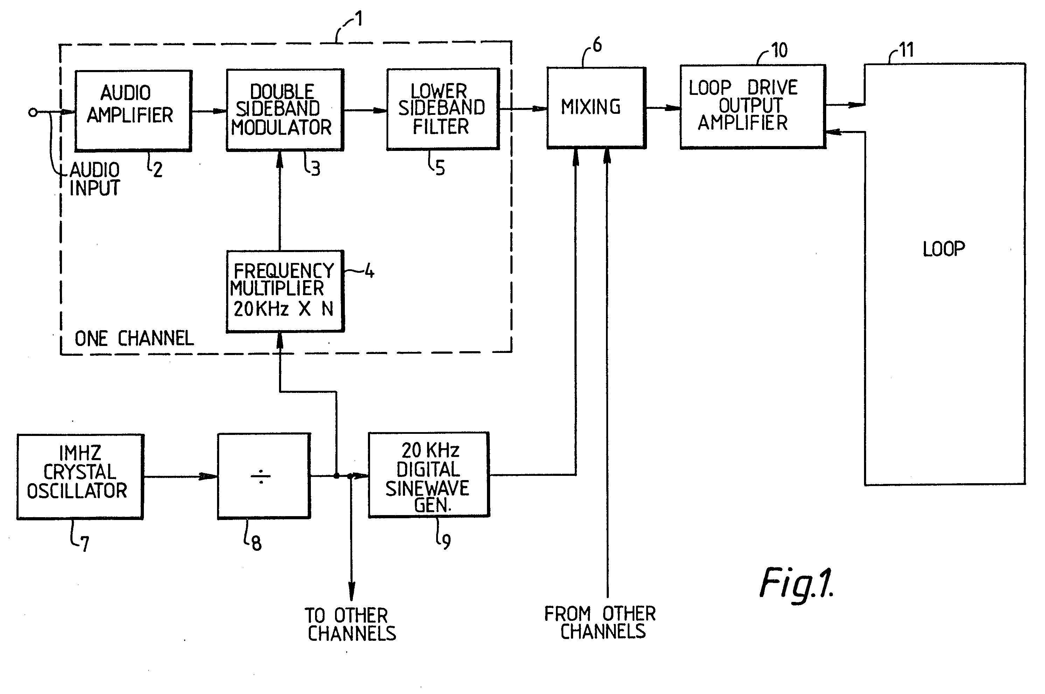

Referring to Fig.1 of the drawings, the transmitter of the inductive loop system includes a plurality of modulating and filtering circuits 1, of which only one is shown in the figure. There will be one such circuit for each channel which is to be transmitted.

Each circuit 1 comprises an audio amplifier 2 to which an audio input, for example from a magnetic tape play-back unit (not shown), is fed. The output of the amplifier circuit 2 is fed to a balanced modulator circuit 3, in which it modulates a sub-carrier frequency which is fed to it from a frequency multiplier circuit 4. The output of the modulator circuit 3 is a double-sideband suppressed-carrier signal, and this is passed through a filter 5 which suppresses the upper sideband and provides some pre-emphasis, for a purpose which will be described later. The resultant lower sideband is fed to one input of a mixer 6. The corresponding outputs of the circuits 1 for the other channels are fed to respective inputs of the mixer 6.

The frequency multipliers 4 for all of the channels are supplied with a 20KHz reference pulse train which is obtained by dividing the output of a 1MHz crystal oscillator 7 in a divider circuit 8. The multiplying factor N of the multipliers 4 has the value 3 for the first channel, 4 for the second, 5 for the third, and so on, so that sub-carrier frequencies of 60KHz, 80KHz, 100KHz, etc. are produced in the respective circuits 1.

A pilot tone comprising a 20KHz digital sinewave is produced by a circuit 9 and is fed to another input of the mixer 6.

As will be described later, each sub-carrier is phase-locked to the 20KHz reference signal.

A signal comprising the combination of the pilot tone and all of the lower sideband signals from the various channels is fed from the mixer 6 to a transmitter loop driver circuit 10 which feeds corresponding current signals into a loop 11 which may be positioned around the perimeter of a recording studio or other room.

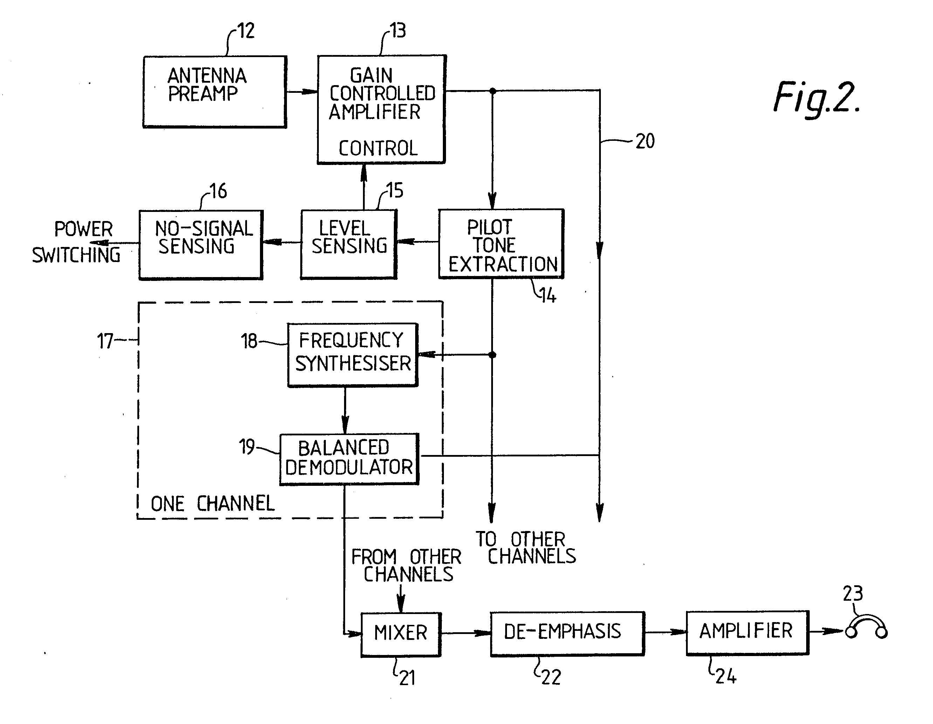

A receiver unit for receiving the signals from the loop is shown in schematic block form in Fig. 2 of the drawings. An antenna is located within the magnetic field produced by the loop, and signals induced in the antenna are amplified by a pre-amplifier circuit 12 and are fed to an amplifier 13, the gain of which is controlled by the level of 20KHz pilot tone received. The transmitted pilot tone level is maintained constant, so the received pilot tone level is a measure of the gain of the system, and fluctuations in the received level are made to cause opposing changes in the gain of the amplifier 13, so that a substantially constant overall gain is achieved.

This automatic gain control is obtained by feeding the output from the amplifier 13 into a pilot tone extraction circuit 14 which passes a sample of the pilot tone to a level sensing circuit 15 which produces a d.c. voltage corresponding to the received pilot tone level. This d.c. voltage is used to control the gain of the amplifier 13. A circuit 16, connected to the level sensing circuit 15 responds to the complete absence of received pilot tone to switch off certain parts of the receiver unit, in order to conserve a battery supply within the unit.

The pilot tone from the filter 14 is also fed to a plurality of sub-carrier regeneration circuits 17, one for each channel, of which only one such circuit is shown in the figure. Each circuit 17 includes a frequency synthesiser 18 which produces the pilot tone frequency in the same way as the multipliers 4 in the transmitter, thereby producing 60KHz, 80KHz or 100KHz, etc., signals, as the case may be. The respective regenerated sub-carrier signal is fed to a balanced demodulator circuit 19.

The output of the amplifier 13, which contains all of the transmitted sidebands, is fed via a line 20 to all of the balanced demodulators 19, so that each circuit 19 demodulates its respective sideband, as determined by the sub-carrier frequency applied to the demodulator.

The resultant audio signals are fed from the demodulators 19 to respective inputs of a mixer 21, wherein the balance between the various audio signals can be set as desired by the operator. The signals are fed through a de-emphasis circuit 22 which produces the correct response for feeding to headphones 23 after further amplification by an amplifier 24.

The sub-carriers in the receiver are all phase-locked to the pilot tone, and hence are frequency- and phase-locked to the corresponding sub-carriers in the transmitter.

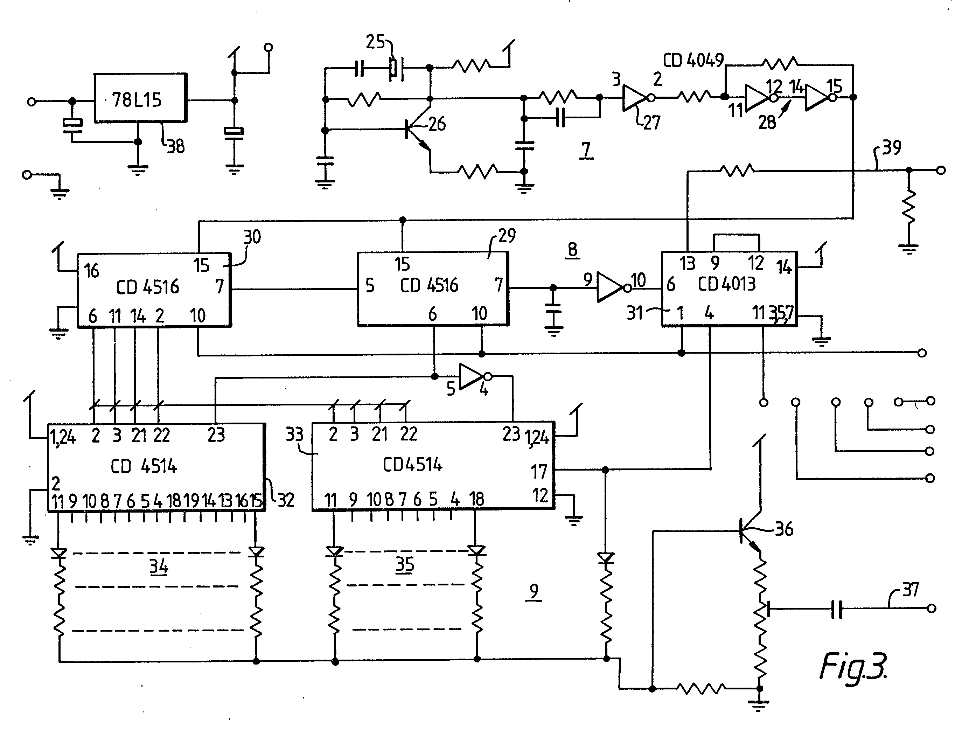

The circuitry of the transmitter will now be described in more detail. Fig.3 illustrates, schematically, the pilot tone generator circuitry 7 and 8 of Fig.1. A 1MHz crystal 25 drives a transistor 26, the output of which is fed through a buffer inverter 27. In order to sharpen up the waveform, the inverter output is fed to a Schmitt trigger circuit 28, which produces a 1MHz pulse train. This pulse train is fed to the divider circuit 8, which is made up of two integrated circuit dividers 29 and 30. These dividers together produce a count of 25, and are made to count successively up and down under the control of a flip-flop in an integrated circuit 31. The dividers are connected to multiplexing circuits 32 and 33, with associated diode/resistor networks 34 and 35, the output of which is a digital sinewave. This is fed via an impedance buffer transistor 36 to a pilot tone output line 37.

A voltage regulator circuit 38 regulates the power supply for the circuits of Fig.3.

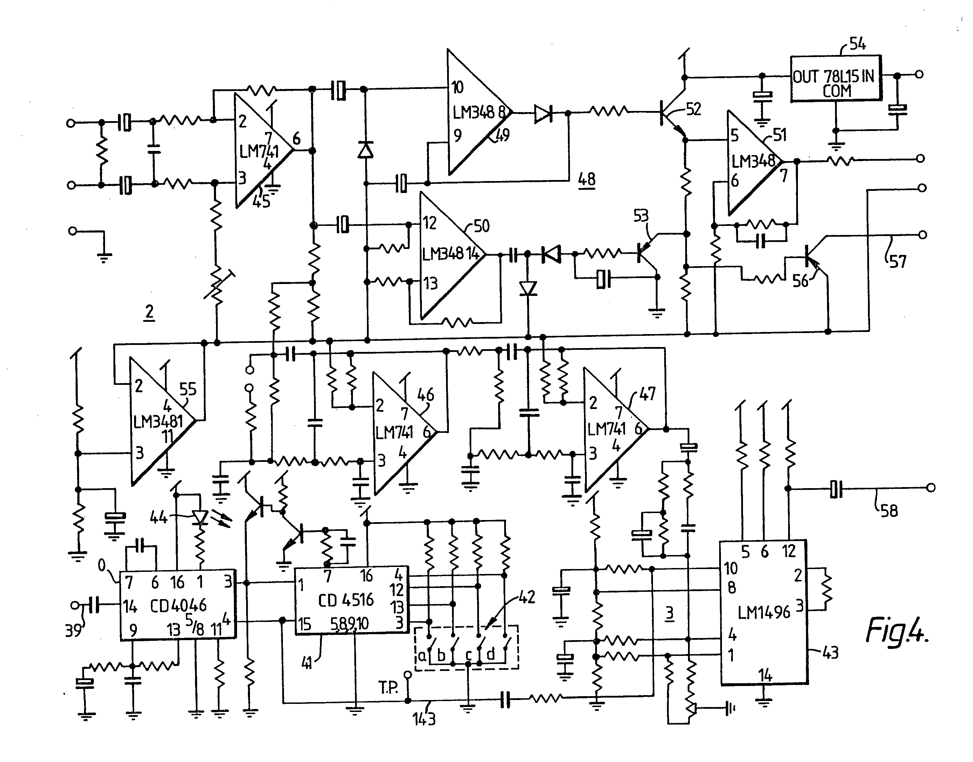

The integrated circuit 31 also produces, in response to the divided-down output of dividers 30 and 29, a 20KHz pulse train which is fed via a line 39 to the frequency multiplier 4 of one of the various modulating and filtering circuits 1 (see Fig.4). Similar circuits (not shown) provide similar pulse trains for the other frequency multipliers.

Referring now to Fig.4, it will be realised that there will be a circuit as shown therein for each audio channel which is to be transmitted. In a preferred embodiment there are five such channels.

The 20KHz pulse train on the line 39 is fed to the reference input of a phase-locked loop circuit comprising two integrated circuits 40 and 41. This circuit acts as a multiplier and generates a sub-carrier signal having a frequency which is a multiple of 20KHz, the value of the multiple being determined by the setting of switch sections 42a - 42d. The provision of the switch 42 enables the operator to set the frequency for a particular channel without having to change any components. The Fig.4 circuits for all of the channels can, therefore, be identical. For example, a 60KHz sub-carrier may be obtained with switch sections 42c and 42d closed; 80KHz with sections 42a, 42b and 42d closed; 100KHz with sections 42b and 42d closed; and so on.

The sub-carrier output of the phase-locked loop, is fed over a line 143 to the balanced modulator circuit 3 which comprises an integrated circuit 43. When the phase-locked loop is locked, the sub-carrier will be synchronised with the 20KHz pulse train and, hence, also with the 20KHz digital sinewave. If the loop is not properly locked, a light-emitting diode 44, connected to the circuit 40, is energised as a warning.

The audio amplifier circuit 2 comprises an input amplifier 45 which converts the balanced audio input signal from the tape play-back unit into an unbalanced signal. This signal is then fed to a filter chain comprising integrated circuits 46 and 47 which gives a sharp cut-off at 18KHz. The filtered audio signal is fed to the balanced modulator circuit 43.

The balanced modulator circuit produces, at an output 58, a double-sideband signal centred around the particular sub-carrier frequency for that channel.

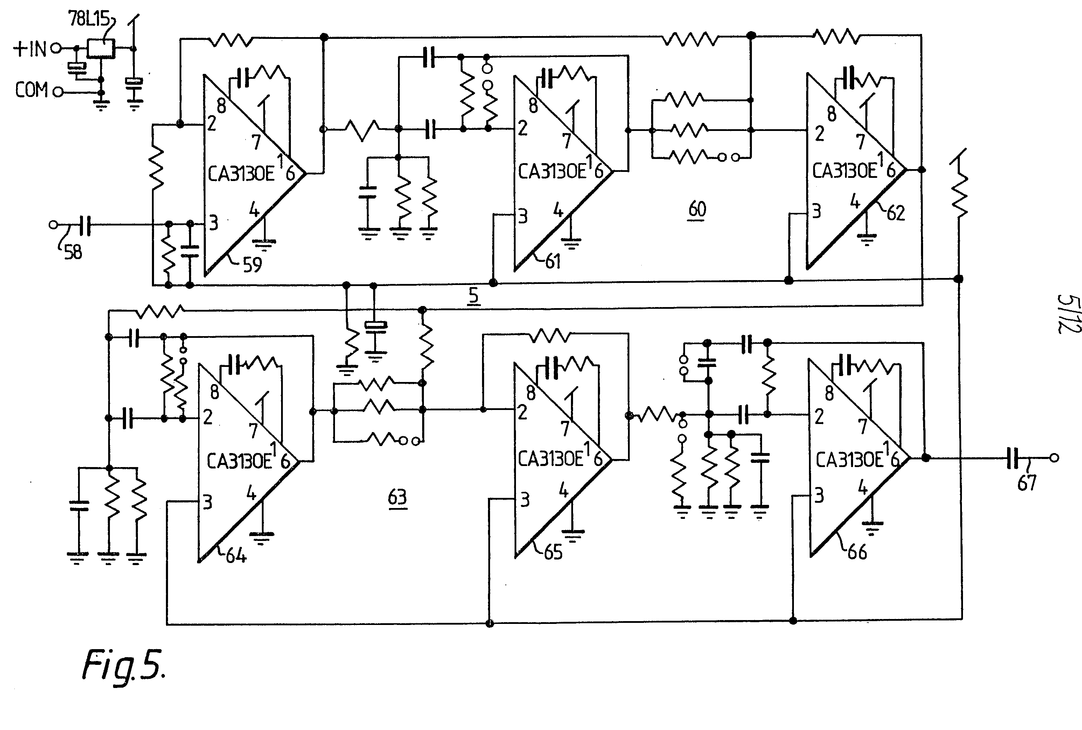

A circuit 48 comprising integrated circuit sections 49, 50 and 51 and associated transistors 52 and 53 is concerned with metering of the audio signal levels. If an audio signal is present, the transistor 53 feeds a signal to a transistor 56, which produces an output on a line 57 for energising a battery economy circuit in t] automatic controller circuit of Fig. 5. Integrated circuits 54 and 55 provide stabilised power supplies fo: the circuit of Fig. 4.

For each channel there is a filter circuit 5 as shown in Fig.5 for extracting the required lower sideband from the double-sideband signal produced at the output 58 by the modulator circuit 43 of Fig.4. This signal is fed to a buffer circuit 59, and the output therefrom is fed to a low-Q notch filter circuit 60 comprising integrated circuits 61 and 62. The filter is preset to have a centre frequency which is equal to the particular sub-carrier plus 10KHz. The filter then gives $180^{o}$ of phase shift at the centre frequency. The double sideband signal and the filtered signal are mixed at the inverting input of the circuit 62, so that a deep notch is produced in the output at the centre frequency, thereby partially eliminating the upper sideband. The remaining signal is fed to a further notch filter 63, comprising circuits 64 and 65, which operates similarly to the filter 60 but has a centre frequency equal to the sub-carrier plus 15KHz to suppress the upper sideband further.

The output of this filter is fed to a band-pass filter 66 having a centre frequency equal to the sub-carrier frequency minus 15KHz. This produces still further suppression of the upper sideband and also produces pre-emphasis of the required lower sideband, i.e. a rising output towards the low frequency end of the sideband. Signals of frequencies below the lower limit of the required sideband are also suppressed by this filter.

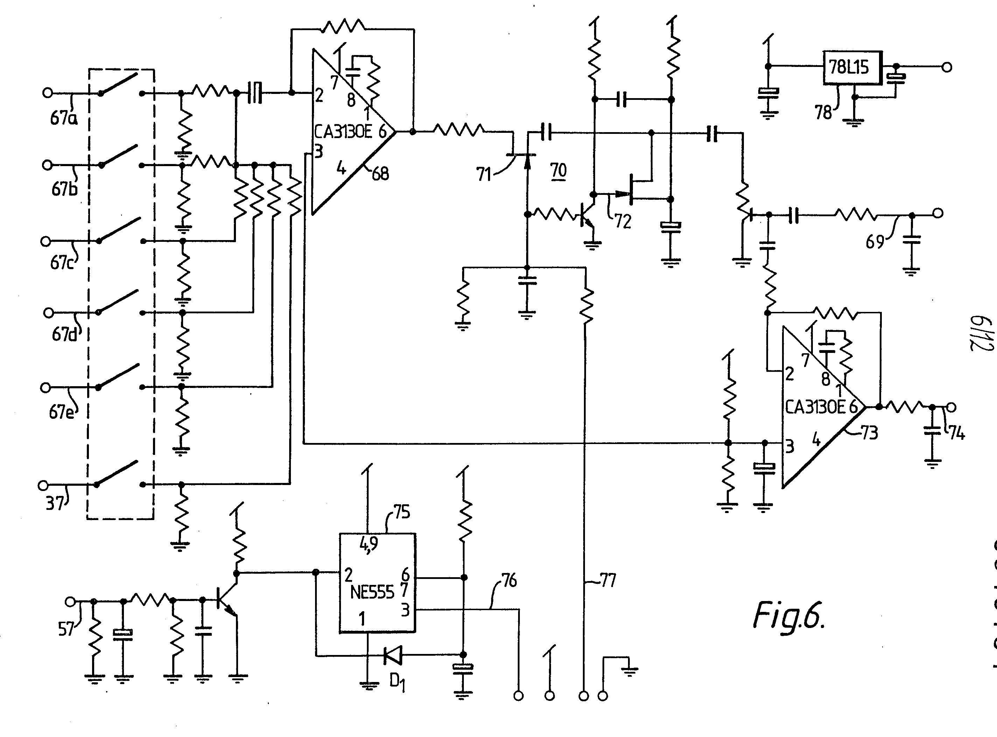

For each channel, the output of the filter 66 is fed via a line 67 to the respective input 67a - 67e of a mixer circuit 6 shown in Fig. 6. The digital sinewave pilot tone on the line 37 of Fig.3 is fed to a further input of the mixer. The inputs are all connected to a summing amplifier 68, the output of which therefore comprises the lower sidebands for all of the channels, plus the pilot tone. This output is fed to an output line 69 via a signal gate 70 comprising series and parallel transistors 71 and 72, respectively. The output is also fed via an inverter 73 to an output line 74. The gate 70 can be controlled by the signal on the line 57 from each of the Fig.4 circuits for the various channels, so that if no audio signal is present for a prescribed period on any channel, the gate is closed so that no signal is transmitted and the receiver power supply is thereby conserved.  The signal on each line 57 is fed to a timer 75 which counts for 60 secs. if no audio signal is present and then closes the gate.  When an audio signal is again present on any channel the timer 75 resets and the gate is reopened.  This automatic timing control is effected by interconnection of the timer output 76 and a gate control line 77, via a switch (not shown) which is set in an "auto mode" position.

A stabiliser circuit 78 controls the power supply to the Fig.6 circuit.

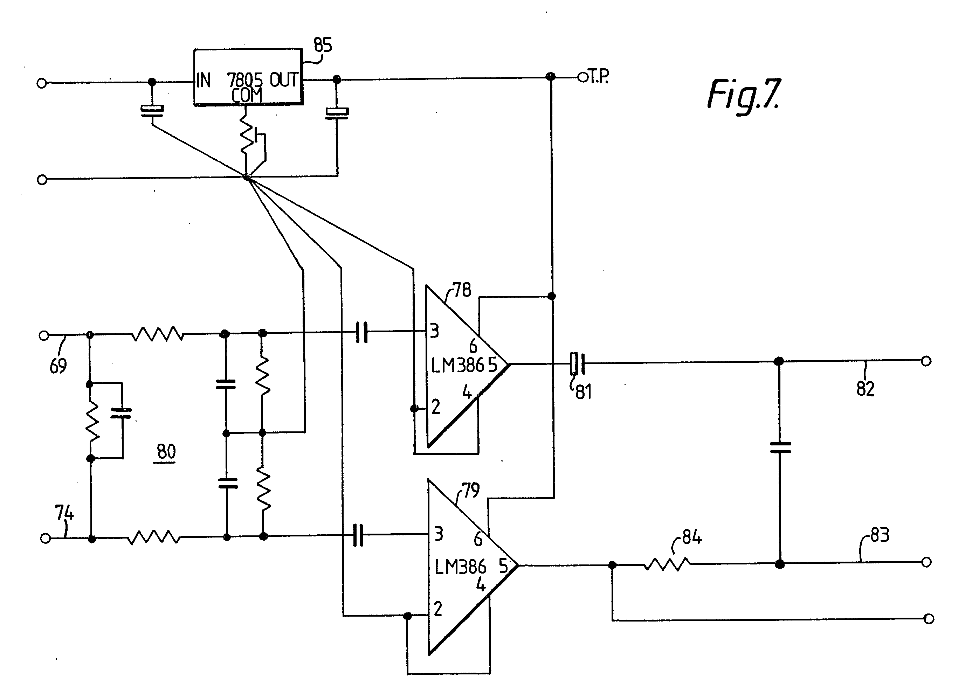

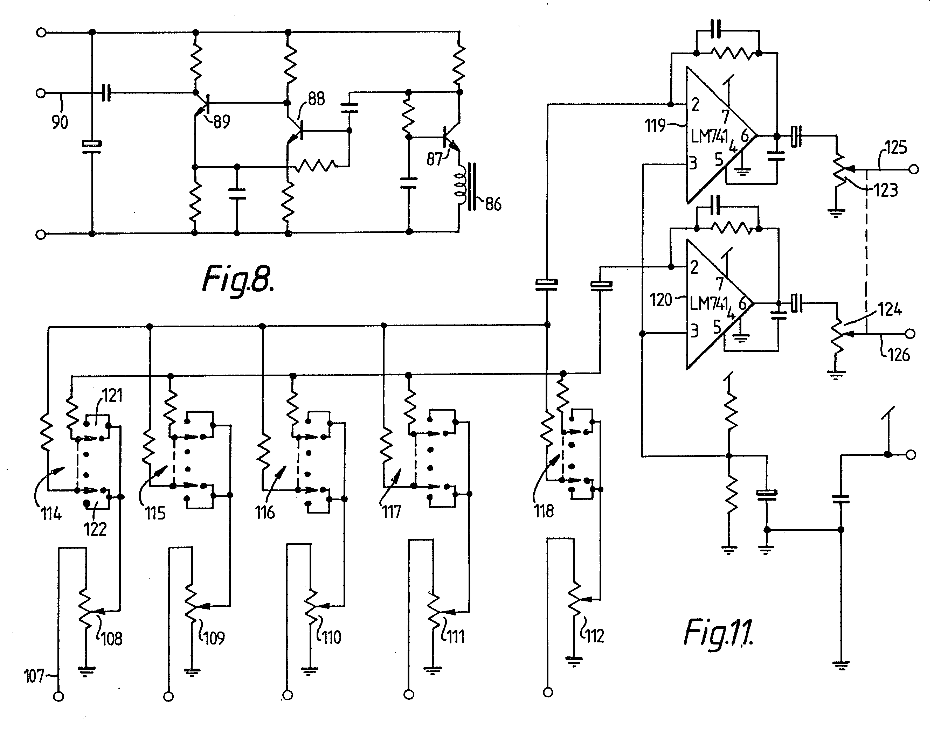

Referring to Fig.7, the differential signals on the lines 69 and 74 of Fig. 6 are fed to loop driver amplifiers 78 and 79 via a protective filter network 80. The amplifier output signals are fed via a d.c. decoupling capacitor 81, at the required level and impedance, to the loop 11 (not shown in Fig.7), which is connected across outputs 82 and 83.  A resistor 84 may be connected in series with the loop to provide short-circuit protection and for use in measurement of the loop current.  Integrated circuit 85 is a voltage regulator.

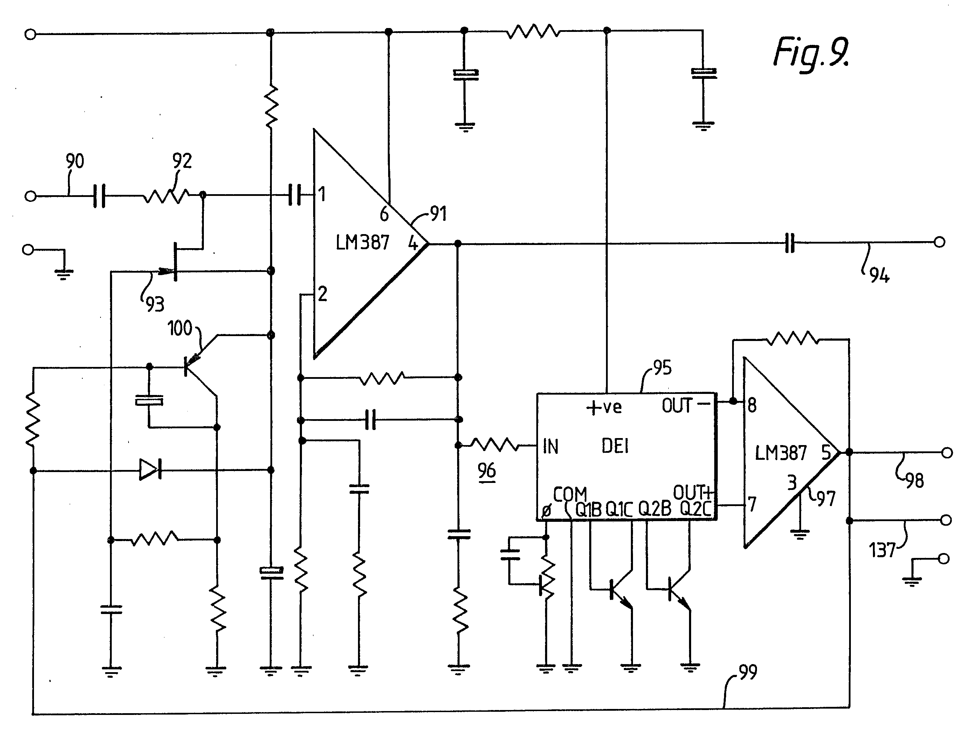

Turning now to the receiver unit, Fig. 8 shows a pre-amplifier for amplifying the signals received from the transmitter loop 11 by a ferrite rod antenna 86. The pre-amplifier comprises a transistor 87 connected in common-base mode to the antenna 86 followed by high-gain transistor stages 88 and 89 which amplify the signals and provide some high-pass filtering.  The pre-amplifier output is fed via a line 90 to the input of an amplifier 91 (Fig.9) via a variable impedance divider network comprising a resistor 92 and a field effect transistor 93.

The signal from the amplifier 91 is fed to an output 94 and also to a synchronisation module 95 via a potential divider network 96. The module 95, together with an integrated circuit 97, extracts the 20KHz pilot tone from the wide-band received signal and feeds it to an output 98, and also feeds it via a line 99 to the base electrode of a transistor 100 which controls the effective impedance of the transistor 93. Hence, the level of the pilot tone at the output 98 controls the amplitude of the signals fed to the amplifier 91. Closed-loop automatic gain control of the received wide-band signals is therefore obtained by maintaining the received pilot tone signal level constant.

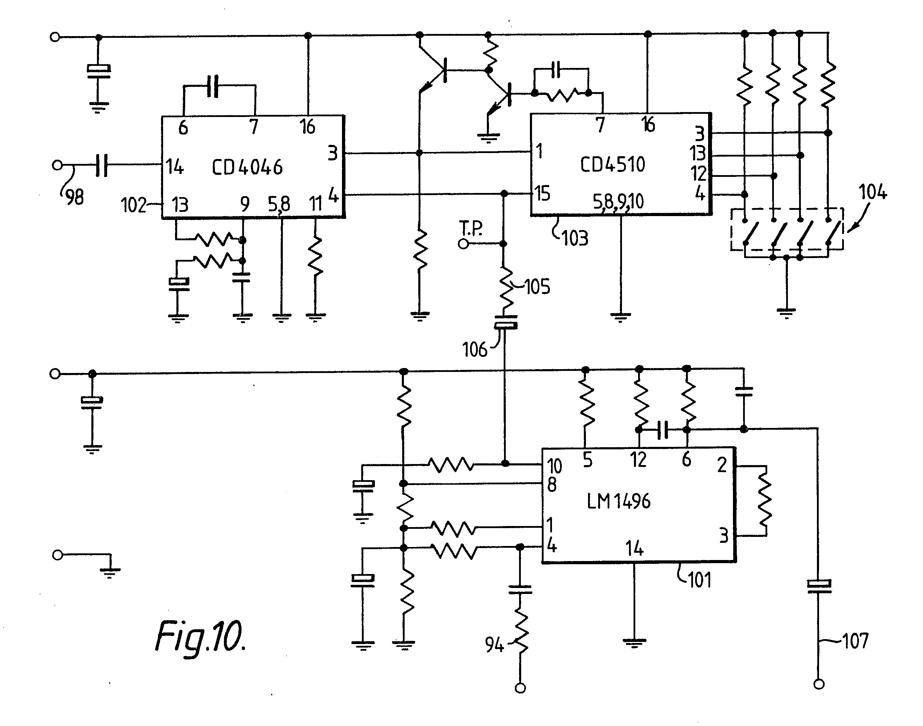

The output on the line 94 of Fig. 9 is fed to the input of an integrated circuit balanced demodulator 101 (Fig.10). The received pilot tone on the line 98 is fed to the input of a phase-locked loop comprising integrated circuits 102 and 103, which operates similarly to the loop 40 and 41 (Fig.4) of the transmitter to synthesise a sub-carrier having a required one of the channel frequencies as determined by the setting of selected sections of a switch 104. The sub-carrier pulse train is fed via a resistor 105 and a capacitor 106 to the demodulator 101, so that the received signals relevant only to that particular channel are demodulated. The resultant audio signals are fed to an output line 107.

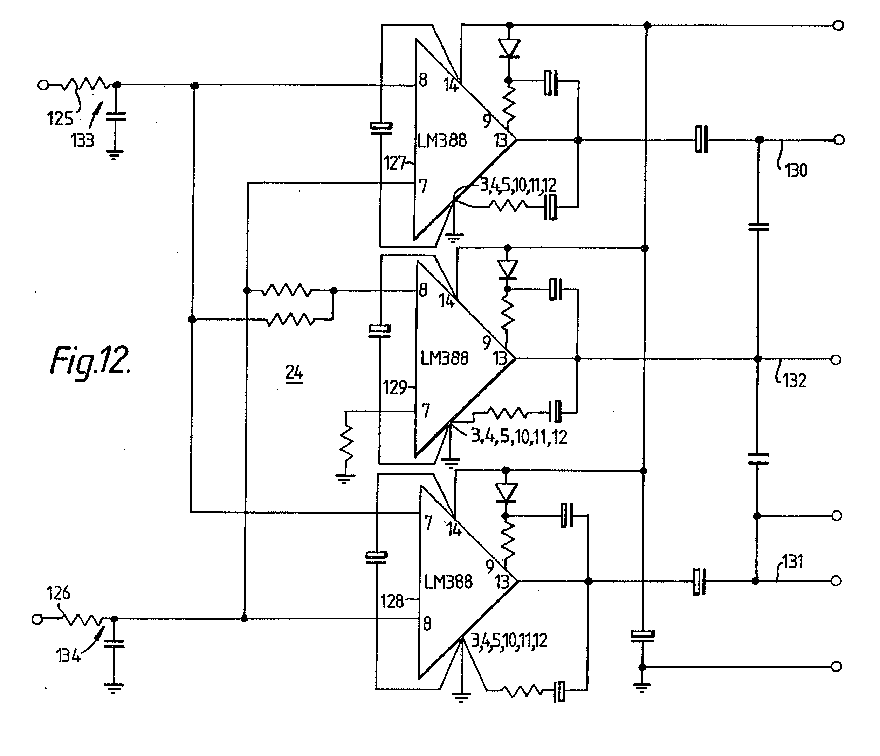

The signals on the line 107 are fed to a respective fader 108 for that channel (Fig.11) and, likewise, audio signals from the other four circuits corresponding to Fig.10 are fed to respective faders 109 - 112. These faders are all readily adjustable by the user of the receiver to obtain a desired mix of the available audio signals.

The output of the faders 108 - 112 are fed to respective switching circuits 114 - 118, respectively. These circuits are identical, so only the circuit 114 will be described. This circuit comprises two ganged three-position switches 121 and 122 arranged to connect the fader output either to one amplifier 119 or to another amplifier 120, or to both amplifiers simultaneously, in accordance with the user's requirements. The amplifiers 119 and 120 mix their inputs from the five channel faders 108 - 112 as selected by the switch positions, and feed their outputs to ganged master faders 123 and 124.

The audio outputs from these faders are fed on lines 125 and 126, respectively, to the output amplifier 24 (Fig.12) which can drive a low-impedance three-line load, such as stereo headphones. The amplifier comprises amplifying circuits 127, 128 and 129 which are connected in a bridge mode and which feed their outputs via two outer lines and a common output line 130, 131 and 132, respectively, to the load (not shown in Fig.12).

It was previously explained that pre-emphasis of the lower sideband signals is effected at the transmitter. This pre-emphasis provides considerable improvement in channel separation, but must be removed from the received audio signals if high-quality reproduction of the audio input to the various channels, for example recorded music, is to be effected. This de-emphasis is provided by resistance/capacitance networks 133 and 134 at the inputs to the amplifier 24.

In operation of the system, the various audio input signals are fed to the transmitter and are modulated on to respective sub-carriers which are all fed to the transmitting loop. Any number of the receivers may be located within the field from the loop, for example a respective receiver for each of a group of musicians. Each musician will have a pair of stereo headphones connected to the receiver output lines 130 - 132, and he can mix the received audio channel signals in any way he pleases, by setting the faders 108 - 112 on his receiver.  By setting the switches 114 - 118, he can arrange to hear any of the audio channels from whichever earpiece of the headphones he chooses.  The audio channels may contain recorded music from respective instruments or groups of instruments, and the musician can, therefore, adjust the balance of the instruments at will, and also decide the apparent relative location of the musicians.  The ganged master faders 123 and 124 (Fig.11) can be used to set the overall sound level from the headphones.

A good overall audio response can be achieved, due to the use of the transmitted pilot tone at the receiver for regenerating phase-locked sub-carriers for demodulation of the sideband signals.  Good reproduction of music is therefore possible, which would be quite impossible with known inductive-loop speech transmission systems.

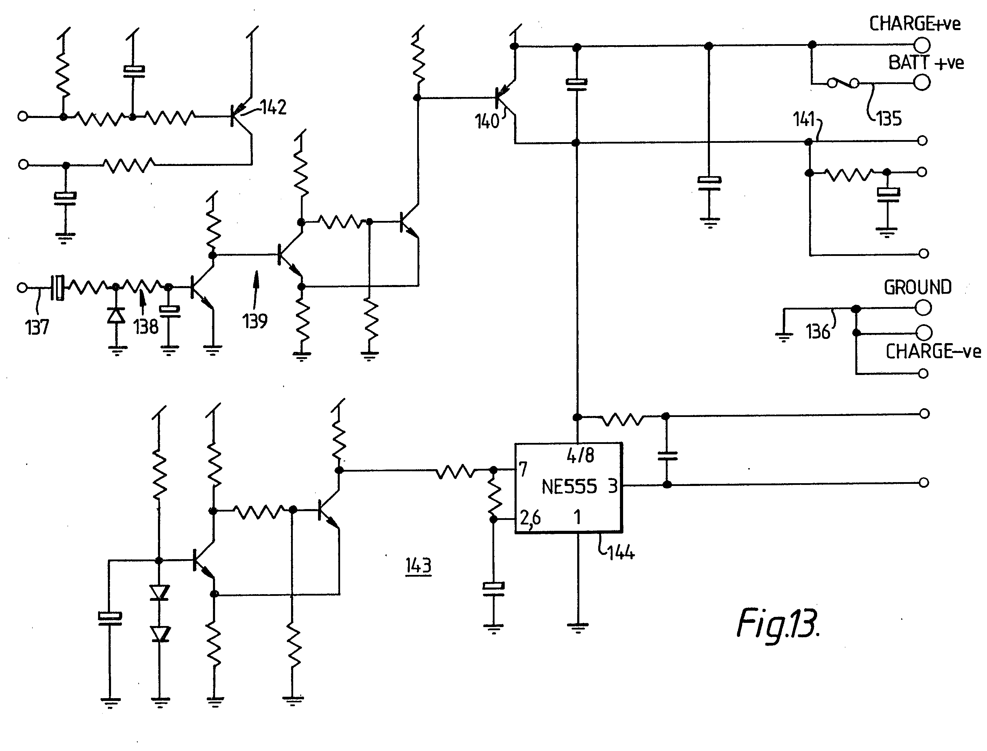

Each receiver unit can be made quite small so that it does not take up much floor space, for example in a recording studio.  Clearly, much of the advantage of the inductive loop system would be lost by the use of trailing power supply leads.  The receiver therefore includes a rechargeable battery which is capable of running the receiver for 2 to 5 days without recharging. Economy of power results from the use of a power switching circuit (Fig.13).

The battery (not shown) is connected to inputs 135 and 136.  Pilot tone is fed over a line 137 from the circuit of Fig.9, to a rectifier circuit 138 and thence to a switching transistor circuit 139.  This controls a transistor 140 which is in series between the battery and a power supply line 141.  In the absence of pilot tone, the transistor 140 turns off, thereby switching off the power supply to all of the receiver circuits which are not concerned with the receipt of the pilot tone or the sensing of its level.

If no load is connected to the audio amplifier output so that no output current flows, i.e. the receiver is not in use, a transistor 142, connected to the audio output, inhibits operation of the pilot-tone-responsive circuit 139, so that the transistor 140 is turned off.

A circuit 143 compares the battery voltage with a voltage reference and, if the battery voltage is low, causes a flasher circuit 144 to operate to energise a light-emitting diode as a warning that the battery will soon require recharging.

If desired, the transmitter can drive more than one inductive loop, so that each loop covers a smaller studio area.

CLAIMS

1. An audio frequency transmission system, comprising an inductive loop to produce a magnetic field within a receiving area; a transmitter to feed signals to the loop to cause production of the magnetic field; and a receiver including means to be located within the receiving area so as to be inductively coupled to the loop to receive the transmitted signals; characterised in that the transmitter includes means (7, 8, 9) to generate a reference frequency signal, means (4) responsive to the reference frequency signal to generate a plurality of sub-carrier signals of mutually different frequencies, a modulator (3, 5) to modulate the sub-carrier signals with respective audio frequency signals which are to be transmitted and to suppress the sub-carrier frequencies from the resultant modulated signals, and means (6, 10) to feed the modulated signals and the reference frequency signal to the inductive loop (11) to produce said magnetic field; and in that the receiving apparatus includes means (86, 12) to receive the modulated signals and the reference frequency signal, means (18) responsive to the reference frequency signal to generate in the receiving apparatus a plurality of sub-carrier signals having the same frequencies as the sub-carrier signals generated in the transmitter, and means (19) responsive to the sub-carrier signals generated in the receiving apparatus to demodulate the received modulated signals thereby recovering the respective audio frequency signals.

2. A system as claimed in Claim 1, characterised in that the means in the transmitter to generate a plurality of sub-carrier signals comprises a corresponding plurality of oscillators (4) which are phase-locked to the reference frequency signal.

3.    A system as claimed in Claim 1 or Claim 2, characterised in that the means to modulate the sub-carrier signals and to suppress said signals from the resultant modulated signals comprises a balanced modulator (3) and filtering means (5).

4.    A system as claimed in any preceding claim, characterised in that the means to generate a reference frequency signal comprises a crystal-controlled digital sinewave generator (7, 8, 9).

5.    A system as claimed in any preceding claim, characterised in that the modulated signals comprise only the lower sideband signals.

6.    A system as claimed in Claim 5, characterised in that the reference frequency signal has a frequency of 20KHz, and the sub-carrier signal frequencies are integral multiples of 20KHz.

7.    A system as claimed in any preceding claim, characterised in that the means in the receiving apparatus to generate a plurality of sub-carrier signals comprises a corresponding plurality of oscillators (18) which are phase-locked to the reference frequency signal.

8.    A system as claimed in any preceding claim, characterised by means (15, 13) in the receiving apparatus responsive to the magnitude of the received reference frequency signal to control the gain of the receiving apparatus to tend to compensate for changes in said magnitude.

9.    A system as claimed in any preceding claim, characterised by, in the receiving apparatus, a battery supply for energising the receiving apparatus, and means (16) responsive to the magnitude of the received reference frequency signal to de-energise part of the receiving apparatus if said magnitude falls below a predetermined value.

10.    A system as claimed in any preceding claim, characterised by, in the receiving apparatus, a plurality of faders (108 - 112), corresponding to the plurality of sub-carrier signals, for adjusting the levels of the respective demodulated signals; and means (114 - 132) to feed the demodulated signals from the faders to a common load.

11. A system as claimed in Claim 10, characterised in that the means to feed the demodulated signals to the load includes a stereo amplifier (119, 120, 127-129) having two inputs to either of which any of the demodulated signals can be fed selectively.

12. A system as claimed in Claim 11, characterised in that the load comprises stereo headphones (23).

13. A system as claimed in any preceding claim, characterised by means (5) in the transmitter to emphasise higher frequency components of the audio frequency signals relative to the lower frequency components; and means (22) in the receiving apparatus to de-emphasise said higher frequency components in the demodulated signals.

*Fig.1.*

*Fig.2.*

Fig.3.

3/12

00157554

Fig.4.

Fig.5.

Fig.6.

Fig.7.

7/12

0015754

Fig.8.

Fig.11.

8/12

0015754

Fig.9.

9/12

0015754

Fig.10.

Fig.12.

0015754

Fig.13.

## DOCUMENTS CONSIDERED TO BE RELEVANT

| Category | Citation of document with indication, where appropriate, of relevant passages | Relevant to claim |
|---|---|---|
| | DE - C - 577 056 (TELEFUNKEN)<br>* Page 2, lines 33-50 *<br><br>-- | 1,5 |
| | IEEE INT. CONF. ON COMMUN., June 1975, pages 8-6 - 8-9<br>San Francisco, U.S.A.<br>S.W. ANDERES et al.: "Direct-to-line and directly formed supergroup multiplex equipment"<br>* Page 8-6, left-hand column, lines 38-43; page 8-6, right-hand column, lines 12-13; page 8-7, left-hand column, lines 12-15; page 8-7, left-hand column, lines 17-24 *<br><br>-- | 1,2,7,8 |
| | FR - A - 1 497 895 (SPEMBLY LTD.)<br>* Page 3, left-hand column, lines 19-26 *<br><br>-- | 3 |
| | ELECTRO MEDICA (SIEMENS), vol. 39, no. 5, 1971, pages 177-179<br>Erlangen, DE.<br>K.O. PASEMANN: "Eine drahtlose Stereo-Hör-Sprechanlage"<br>* Page 177, left-hand column, lines 43-44; page 178, lines 9-17; page 179, lines 1-3; figure 6 *<br><br>-- | 10-12 |
| | US - A - 4 061 972 (V.R. BURGESS)<br>* Column 3, lines 50-53 *<br><br>---- | 13 |

**CLASSIFICATION OF THE APPLICATION (Int. Cl. 3)**

H 04 B 5/00
1/68

**TECHNICAL FIELDS SEARCHED (Int.Cl. 3)**

H 04 B 5/00
1/68
H 04 J 1/08

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-06-1980 | STRASSEN |

EPO Form 1503.1  06.78